# EUROPÄISCHE PATENTSCHRIFT

(11) **EP 1 201 508 B1**
(45) Veröffentlichungstag und Bekanntmachung des Hinweises auf die Patenterteilung: **02.03.2005**
(21) Anmeldenummer: 01120833.7
(22) Anmeldetag: 30.08.2001
(51) Int. Cl.: B60R 21/06

(54) **Sicherheitsnetz zur lösbaren Anbringung in einem Fahrzeug**
Removably mounted safety net for vehicle
Filet de sécurité démontable pour véhicule

(30) Priorität: 31.10.2000 DE 10054080
(43) Veröffentlichungstag der Anmeldung: 02.05.2002
(73) Patentinhaber: BOS GmbH & Co. KG, 73760 Ostfildern (DE)
(72) Erfinder: Solbrig, Volkmar, 08352 Raschau (DE); Blechschmidt, Christoph, 08340 Schwarzenberg (DE)
(74) Vertreter: Patentanwälte Ruff, Wilhelm, Beier, Dauster & Partner

(56) Entgegenhaltungen:
- DE-A- 3 909 397
- DE-A- 4 010 209
- DE-A- 4 128 701
- DE-A- 19 540 934
- FR-A- 2 741 019
- US-A- 5 288 122

## Beschreibung

Die Erfindung betrifft ein Sicherheitsnetz zur lösbaren Anbringung in einem Fahrzeug gemäß Anspruch 1.

Derartige Sicherheitsnetze weisen eine obere und eine untere Haltestange auf, die in der Regel in fahrzeugseitig vorgesehene Befestigungsöffnungen einhängbar sind. Bei Bedarf kann ein solches Sicherheitsnetz aufgespannt werden, um eine Abtrennung beispielsweise zwischen einem Laderaum und einem Fahrgastraum zu erreichen, und um zu verhindern, daß Gegenstände, beispielsweise während eines Unfalls oder sonstiger starker Beschleunigungen aus dem Laderaum in den Fahrgastraum geschleudert werden.

Die beiden Haltestangen sind regelmäßig etwa so lang wie das Fahrzeug breit ist, und nehmen für den Fall, daß das Sicherheitsnetz nicht aufgebaut ist, sondern im Fahrzeuginnenraum aufbewahrt werden soll, auf Grund Ihrer Länge verhältnismäßig viel Platz in Anspruch. Es ist daher bereits bekannt, die Haltestangen faltbar, d.h. zusammenklappbar auszubilden.

Bei einer bekanntgewordenen jedoch druckschriftlich nicht belegbaren faltbaren Haltestange besteht die Gelenkverbindung aus zwei Gelenkscheiben, die jeweils zwei Bohrungen enthalten. In zusammengeklappter Position sowie in auseinander geklappter Position kommen jeweils zwei unterschiedliche Bohrungen in den Gelenkscheiben miteinander in Flucht. In beiden Positionen können die Haltestangen durch zwei unterschiedliche Riegelelemente arretiert werden, die die beiden Gelenkscheiben axial, d.h. parallel zur Schwenkachse durchgreifen. Jedes Riegelelement ist federbelastet und wirkt mit einem Gegenriegelelement zusammen, welches ebenfalls federbelastet ist. Das Gegenriegelelement dient der manuellen Betätigung des Riegelelementes, um letzteres aus seiner Sperrstellung in seine Lösestellung zu verlagern.

Die Druckschrift WO 01119649 A1 ist als Stand der Technik nach Art. 54(3) EPÜ bekannt und kann daher nicht für die Beurteilung der erfinderischen Tätigkeit herangezogen werden. Sie offenbart ein Sicherheitsnetz mit Haltestangen, die aus je zwei Stangenabschnitten bestehen und die um je ein Scharniergelenk faltbar sind. Die Entriegelung der aufgeklappt verriegelten, schwenkbaren Stangenteile erfolgt durch ein Betätigungselement, das ein Riegelelement parallel zur Scharnierachse verschiebt. Die bekannten Anordnungen sind auf Grund der Vielzahl der Einzelteile verhältnismäßig kompliziert ausgebildet. Ausgehend von diesem Stand der Technik liegt der Erfindung die Aufgabe zugrunde, ein Sicherheitsnetz gemäß Anspruch 1 derart weiterzubilden, das dieses einfacher aufgebaut ist.

Die Erfindung löst diese Aufgabe dadurch, daß das Riegelelement und ein Betätigungsabschnitt zum Lösen des Riegelelementes einstückig ausgebildet sind.

Das Prinzip der Erfindung besteht im wesentlichen darin, statt der im Stand der Technik erforderlichen zwei Riegelelemente sowie zwei Gegenriegelelemente und der insgesamt vier Federelemente nunmehr lediglich ein Riegelelement vorzusehen, welches die Haltestange in ihrer auseinandergefalteten Position sichert. Darüber hinaus ist vorgesehen, das Riegelelement und den Betätigungsabschnitt zum Lösen des Riegelelements einstückig auszubilden, wodurch die Möglichkeit geschaffen wird, daß nur noch ein einziges Federelement zum Vorspannen des Riegelelementes in seine Sperrstellung hinein notwendig ist. Damit besteht die Möglichkeit, die Zahl der Einzelteile wesentlich zu reduzieren.

Gemäß einer vorteilhaften Ausführung der Erfindung ist das Riegelelement mittels einer an einem der beiden Teile angeordneten Steuerfläche steuerbar. Diese Steuerfläche bietet nunmehr die Möglichkeit, für eine weitgehende automatische Verlagerung des Riegelelementes aus seiner Sperrposition in seine Löseposition derart zu sorgen, daß bei einer Verschwenkung des einen Teils relativ zu dem anderen Teil beispielsweise von einer zusammengefalteten Position in eine auseinandergefaltete Position, das Riegelelement nunmehr automatisch aus seiner Sperrposition in seine Löseposition verschwenkt wird.

Gemäß einer weiteren vorteilhaften Ausgestaltung der Erfindung ist die Steuerfläche im Randbereich eines der beiden Teile angeordnet. Dies bietet auf Grund der randseitigen Anordnung besondere Vorteile hinsichtlich der Erzeugung eines möglichst großen Drehmoments mit geringem Kraftaufwand. Außerdem bietet sich die Möglichkeit, eine Steuerfläche durch Prägen eines beispielsweise als Gelenkscheibe ausgebildeten Teils zu erreichen. Diese Konstruktion ist besonders einfach ausgestaltet.

Gemäß einer weiteren vorteilhaften Ausgestaltung der Erfindung ist die Steuerfläche nur entlang einem begrenzten Umfangsbereich eines der beiden Teile angeordnet. Diese Ausführung bietet den Vorteil, daß während der Schwenkbewegung des einen Teils relativ zu dem anderen das Riegelelement in Außereingriffsstellung gehalten werden kann. Sobald die in den beiden Teilen vorgesehenen Bohrungen oder Ausnehmungen zur Aufnahme des Riegelelementes miteinander in Flucht kommen, kann das Riegelelement automatisch in seine Sperrstellung hineinfallen. Die Steuerfläche erstreckt sich somit maximal bis in einen Bereich einer der beiden Teile, in dem die entsprechende Bohrung zur Aufnahme des Riegelelementes liegt.

Gemäß einer weiteren besonders vorteilhaften Ausgestaltung der Erfindung umfaßt das Federelement einen Befestigungsabschnitt zur Befestigung des Riegelelementes an einem der beiden Teile. Das Federelement kann hier somit nunmehr die Funktion der Befestigung mit übernehmen, wobei es sich um eine mittelbare Befestigung des eigentlichen Riegels über das Federelement an einem der beiden Teile handeln kann. Dies veringert weiterhin die Zahl der benötigten Einzelteile.

Gemäß einer weiteren vorteilhaften Ausgestaltung der Erfindung ist das Federelement als Blattfederelement ausgebildet. Diese Ausgestaltung bietet die Möglichkeit einer besonders einfachen preisgünstigen Konstruktion, wobei gewisse Abschnitte des Blattfeder-elementes zur Befestigung bzw. auch zur Ausbildung eines Betätigungsabschnittes vorgesehen sein können.

Gemäß einer weiteren besonders vorteilhaften Ausgestaltung der Erfindung umfaßt das Federelement den Betätigungsabschnitt. Diese Ausführung bietet die Möglichkeit einer weiter reduzierten Zahl von Einzelteilen derart, daß nunmehr praktisch nur noch das Blattfederelement vorgesehen ist, dieses zugleich den eigentlichen Riegel tragen kann und mit einem Ende an einem der beiden Teile befestigt ist, und somit auch den Riegel an einem der beiden Teile befestigt. Zugleich wird mit seinem anderen Ende der Betätigungsabschnitt ausgebildet. Die Zahl der Einzelteile ist somit praktisch auf ein einziges notwendiges Funktionsteil reduziert.

Gemäß einer weiteren vorteilhaften Ausgestaltung der Erfindung weist das Riegelelement einen im wesentlichen polygonalen Querschnitt auf. Diese Ausbildung bietet die Möglichkeit einer besonders stabilen und sicheren Verriegelung.

Gemäß einer weiteren vorteilhaften Ausgestaltung der Erfindung ist dem Riegelelement ein zapfenförmiger Abschnitt zugeordnet, der im Querschnitt kleiner ausgebildet ist als das Riegelelement. Diese Konstruktion bietet den Vorteil, daß der Zapfen nun axial die beiden Teile durchgreifen kann, wobei das Riegelelement an einem Ende des zapfenförmigen Abschnittes angeordnet sein kann. Weiterhin bietet sich nunmehr die Möglichkeit, an dem anderen Ende des zapfenförmigen Abschnittes den Betätigungsabschnitt vorzusehen, wobei eine besonders einfache Konstruktion und Montage möglich wird. Zur Montage wird hier lediglich der zapfenförmige Abschnitt axial durch die gesamte Gelenkverbindung hindurchgesteckt und beispielsweise der Betätigungsabschnitt an dem durchgesteckten Ende befestigt. Auf diese Weise kann der zapfenförmige Abschnitt damit auch das Riegelelement an der Gelenkverbindung sichern.

Weitere Vorteile der Erfindung ergeben sich aus den nicht zitierten Unteransprüchen sowie an Hand der nun folgenden Beschreibung zweier in den Figuren dargestellter Ausführungsbeispiele.

In den Figuren zeigen:
- Fig. 1: in schematischer, geschnittener Ansicht eine Haltestange eines erfindungsgemäßen Sicherheitsnetzes im Bereich ihrer Gelenkverbindung, wobei die Haltestange in auseinander gefalteter Position dargestellt ist,
- Fig. 1a: in Unteransicht die Haltestange aus Fig. 1 gemäß Ansichtspfeil la,
- Fig. 2: die Haltestange gemäß Fig. 1 in zusammengeklappter Position,
- Fig. 3: die Gelenkverbindung der Haltestange gemäß Fig. 1 in Schnittdarstellung gemäß Schnittlinie III-III in einer Darstellung gemäß Fig. 1,
- Fig. 4: die Gelenkverbindung einer Haltestange gemäß einem zweiten Ausführungsbeispiel der Erfindung,
- Fig. 5: das gemäß Fig. 4 linke Teil der Gelenkverbindung in Ansicht in Einzeldarstellung,
- Fig. 6: das gemäß Fig. 4 rechte Teil der Gelenkverbindung in Einzeldarstellung,
- Fig. 6a: das Teil aus Fig. 6 in teilgeschnittener Ansicht gemäß Schnittlinie VI a-VI a,
- Fig. 7: die zusammengebaute Gelenkverbindung gemäß Fig. 4 im Schnitt gemäß Schnittlinie VII-VII in Fig. 4 und
- Fig. 8: die Gelenkverbindung gemäß Fig. 7 mit in Sperrstellung befindlichem Riegelelement.

In den Figuren wurden ähnliche bzw. identische oder funktionsgleiche Teile mit gleichen Bezugszeichen beziffert.

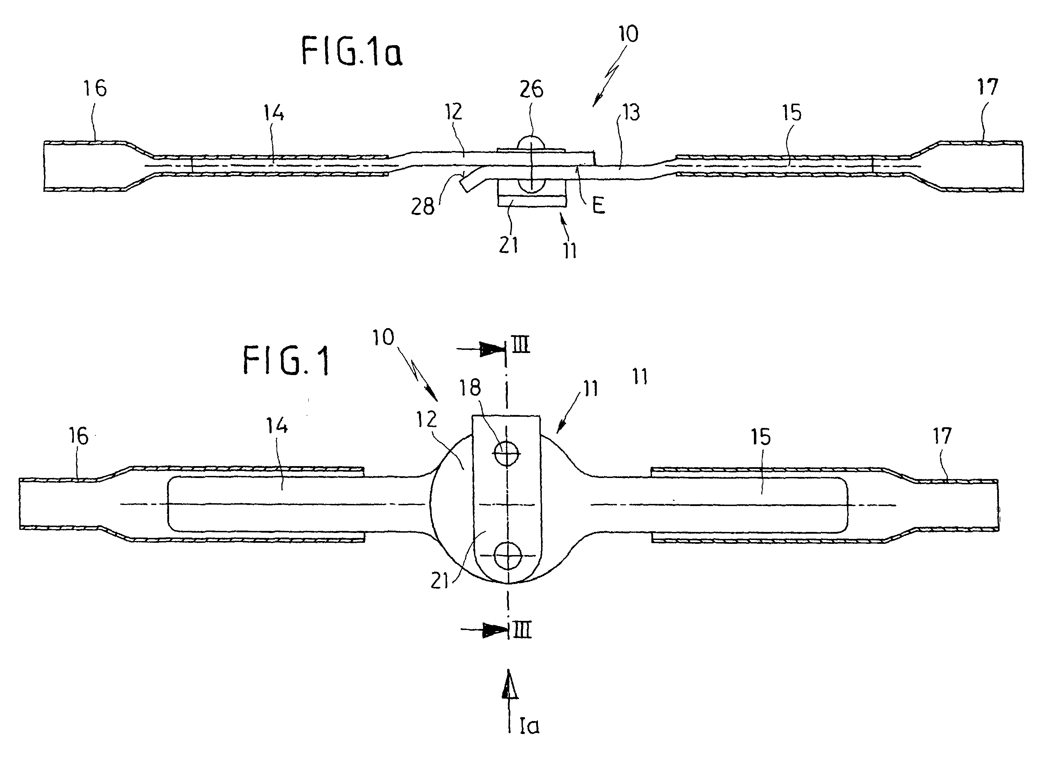

Die Haltestange für ein erfindungsgemäßes Sicherheitsnetz wurde in den Figuren durchgehend mit dem Bezugszeichen 10 bezeichnet. Ihre Gesamtlänge entspricht im wesentlichen der Breite des Innenraums eines nicht dargestellten Kraftfahrzeugs. Etwa mittig weist die Haltestange 10 eine Gelenkverbindung 11 auf, die aus einem ersten Teil einer Gelenkscheibe 12 und einem zweiten Teil einer Gelenkscheibe 13 besteht. Beim Ausführungsbeispiel gemäß den Fig. 1 bis 3 sind die Gelenkscheiben 12, 13 im wesentlichen kreisscheibenförmig ausgebildet und gehen - bei Betrachtung von der Gelenkverbindung 11 entlang der Haltestange 10 nach außen - in einen ersten bzw. zweiten Haltestangenansatz 14, 15 über, an den sich schließlich eine erste bzw. zweite Haltestangenverlängerung 16, 17 anschließt. An den jeweils äußeren, nicht dargestellten Enden der Haltestangenverlängerungen 16, 17 können beispielsweise Befestigungsmittel angeordnet sein. Dabei kann es beispielsweise um pilzartig verbreiterte Befestigungsenden handeln, die in nicht dargestellte fahrzeugseitige Einhängöffnungen eingehängt werden.

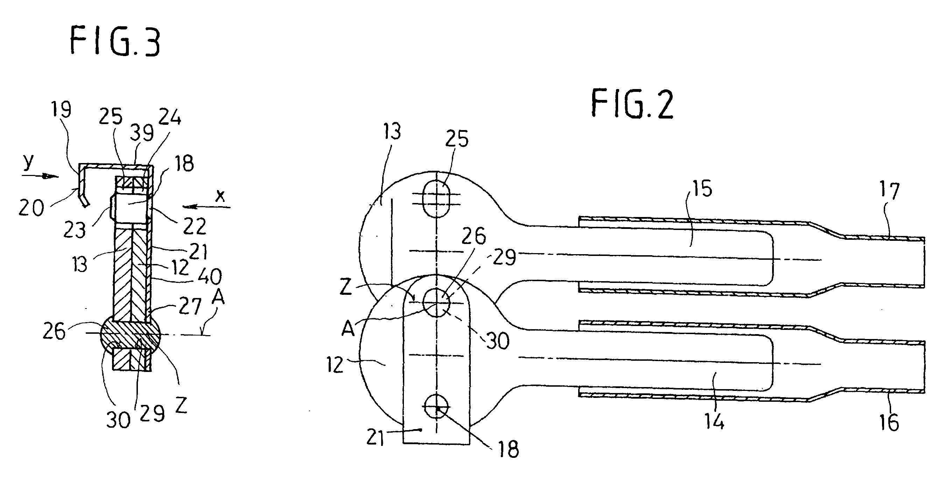

Die beiden Gelenkscheiben 12, 13 und somit auch die entsprechenden Haltestangenteile 14, 15, 16, 17 sind zwischen einer auseinandergefalteten Position (Fig. 1) und einer zusammengefalteten Position (Fig. 2) verschwenkbar. Sie weisen dazu Ausnehmungen 29, 30 auf, die von einem Schwenkzapfen 26 durchgriffen werden. Die Längsachse dieses Schwenkzapfen 26 entspricht einer Schwenkachse A als geometrische Schwenkachse für die Verschwenkung der beiden Gelenkscheiben 12, 13 relativ zueinander.

Die dargestellte Haltestange 10 kann entweder eine obere Haltestange oder eine untere Haltestange für ein nicht dargestelltes Sicherheitsnetz ausbilden. Das Sicherheitsnetz kann beispielsweise derart an der Haltestange 10 befestigt sein, daß es unter Ausbildung einer Schlaufe um die Haltestange 10 herum geführt ist, wobei beispielsweise der Bereich der Gelenkverbindung 11 von der Schlaufenbildung ausgespart ist.

Im Bereich des Schwenkzapfens 26 ist ein im wesentlichen L-förmiges Federelement 21 an der bezüglich Fig. 3 rechten Gelenkscheibe 12 angebracht. Das Federelement weist einen bezüglich Fig. 3 horizontalen Abschnitt 39 und einen bezüglich Fig.3 im wesentlichen vertikalen Abschnitt 40 auf. Mit seinem vertikalen Abschnitt 40 liegt das Federelement 21, welches als Blattfeder ausgebildet ist, an der Außenfläche der Gelenkscheibe 12 gemäß Fig. 3 an. Mit seinem horizontalen Abschnitt 39 übergreift das Federelement 21 die beiden Gelenkscheiben 12, 13 und weist an seinem freien Ende einen weiteren, im wesentlichen vertikalen Abschnitt 19 auf, der als Betätigungsabschnitt ausgebildet ist.

Wie sich insbesondere aus Fig. 3 deutlich erkennen läßt, ist im Bereich des oberen Drittels des vertikalen Abschnittes 40 des Federelementes 20 ein Riegelelement 18 angeordnet. Dies ist ein axial kurzgehaltener Zapfen, der mit seinem bezüglich Fig.3 rechten Ende 22 an dem Federelement 21 befestigt ist. Das bezüglich Fig. 3 linke, freie Ende 23 des Riegelelementes 18 weist Steuerschrägen auf und ist beispielsweise angefast. Alternativ kann das linke Ende 23 des Riegelelementes 18 auch abgerundet sein.

Aus Fig. 3 läßt sich entnehmen, daß in der bezüglich Fig. 3 rechten Gelenkscheibe 12 eine Bohrung 24 und in der bezüglich Fig. 3 linken Gelenkscheibe 13 eine Bohrung 25 angeordnet ist. Beide Bohrungen sind, wie sich beispielsweise aus Fig. 2 ersehen läßt, als Langloch ausgebildet und weisen dementsprechend einen Querschnitt auf, der zumindest in bezüglich Fig. 3 vertikaler Richtung größer ist als der Querschnitt des Riegelelementes 18, was später erklärt wird.

Bei einer Position des Riegelbolzens 18 gemäß Fig. 3 durchgreift dieser beide Ausnehmungen 24, 25 und verhindert auf diese Weise sicher eine Verschwenkung der beiden Gelenkscheiben 12, 13 relativ zueinander, wenn sich diese in einer Position gemäß Fig. 1, also in ausgeklappter Position der Haltestange 10 befinden. Für den Fall, daß ein Benutzer, ausgehend von einer derartigen Position gemäß Fig. 1 (oder entsprechend Fig. 3) die Haltestange 10 zusammenfalten möchte, um sie platzsparend, beispielsweise im Fahrzeugraum aufzubewahren, kann ein Benutzer den Betätigungsabschnitt 19, insbesondere an der Betätigungsfläche 20, durch Kraftausübung in Richtung Y (Fig. 3) derart betätigen, daß der bezüglich Fig. 3 obere Bereich des Federelementes 21 eine geringfügige Schwenkbewegung in Richtung y durchläuft. Es handelt sich dabei um eine Schwenkbewegung um die Befestigungsachse Z herum, die senkrecht zur Schwenkachse A steht.

Eine Betätigung des Federelementes 21 durch Verlagerung in Richtung Y muß nur derartig weit erfolgen, daß das bezüglich Fig. 3 linke Ende 23 des Riegelelementes 18 aus der Ausnehmung 25 der Gelenkscheibe 13 vollständig herausgetreten ist. Nunmehr kann eine Bewegung der Gelenkscheibe 13 relativ zu der Gelenkscheibe 12 erfolgen, um die Haltestange 10 aus ihrer auseinandergefalteten Position gemäß Fig. 1 in ihre zusammengefaltete Position gemäß Fig. 2 zu überführen.

Gemäß dem Ausführungsbeispiel weist die bezüglich Fig. 3 linke Gelenkscheibe 13 eine Steuerfläche 28 auf (Fig. 1a), die ein automatisches Verschieben des Riegelelementes 18 wie folgt gewährleistet: Die Steuerfläche 28 wird zunächst beispielsweise durch ein peripheres Prägen der Gelenkscheibe 13 derart ausgebildet, daß ein Abschnitt des Randes der Gelenkscheibe 13 aus der Ebene E heraus hervorsteht.

Wie sich mittelbar aus Fig. 2 ergibt, befindet sich bei in zusammengefalteter Position befindlicher Haltestange 10 das Riegelelement 18 in seiner Sperrstellung. Die Gelenkscheibe 13 ist nämlich bezüglich der Fig. 2 unteren Gelenkscheibe 12 derart weit verschwenkt worden, daß keinerlei Flächen der Gelenkscheibe 13 mit dem Riegelelement 18 in Kontakt stehen.

Soll die Haltestange 10 nunmehr in den auseinandergefalteten Zustand überführt werden, so findet eine Relativbewegung der Gelenkscheibe 12 relativ zu der Gelenkscheibe 13 derart statt, daß im Verlaufe dieser Schwenkbewegung um die Schwenkachse A irgendwann Flächenbereiche der Gelenkscheibe 13 mit dem bezüglich Fig.3 linken Ende 23 des Riegelelementes 18 in Kontakt gelangen. Diese Flächen werden von der Steuerfläche 28 bereitgestellt und sind derart angeschrägt, daß eine automatische Verlagerung des Riegelelementes 18 in Richtung Y erfolgt. Sobald die langlochartige Ausnehmung 25 mit der entsprechenden Ausnehmung 24 in der Gelenkscheibe 12 in Flucht gelangt, wird auf Grund des Federdrucks des Federelements 21 der Riegelzapfen 18 in seine Sperrstellung zurückversetzt, und die Haltestange ist in ihrer auseinandergefalteten Position automatisch arretiert.

Die langlochartige Ausbildung der beiden Ausnehmungen 24, 25 besitzt u.a. den Vorteil, daß bei einer Schwenkbewegung um die Achse Z, die aufgrund der sehr geringen Bahnlänge eine im wesentlichen axiale Bewegung darstellt, d.h. eine Bewegung im wesentlichen entlang einer Achse parallel zur Schwenkachse A, das Riegelelement 18 führungsfrei und ohne sonstige Behinderungen aus der Ausnehmung 25 der Gelenkscheibe 13 heraustreten kann.

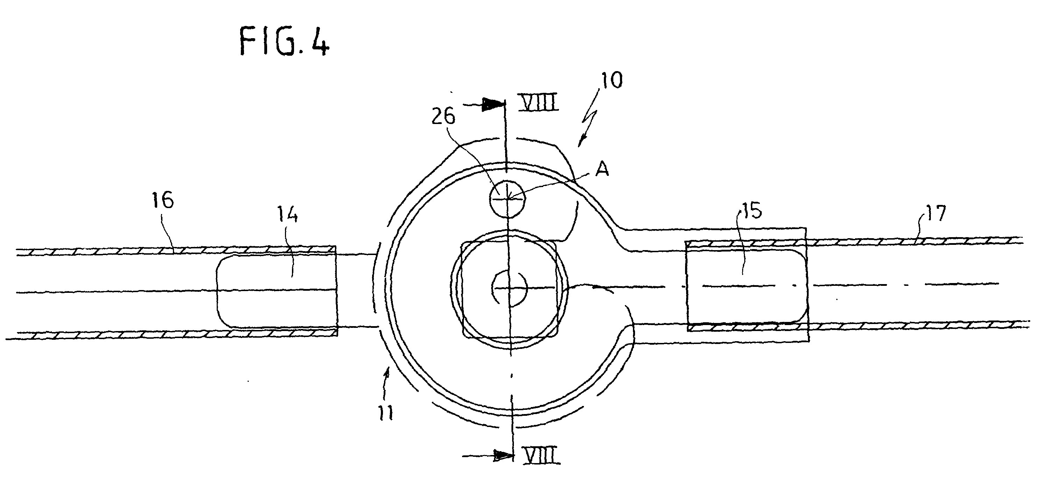

In den Fig. 4 bis 8 ist ein zweites Ausführungsbeispiel der erfindungsgemäßen Haltestange dargestellt.

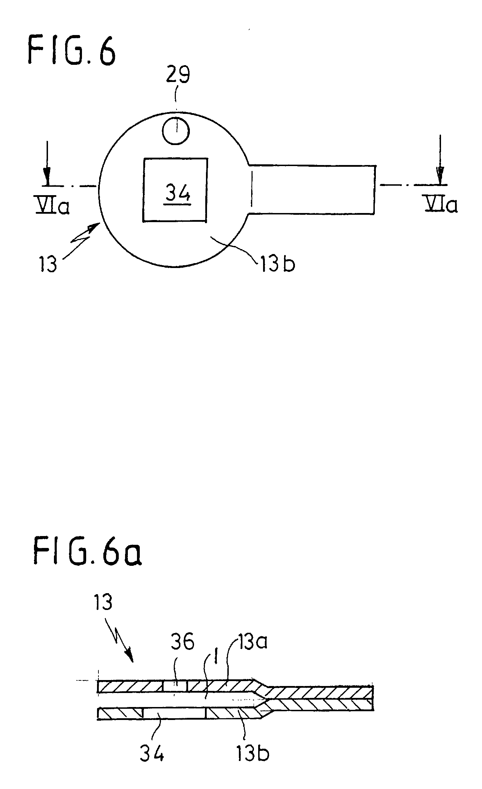

Die Gelenkverbindung 11 umfaßt wiederum zwei gelenkscheibenartige Teile 12, 13, die im wesentlichen kreisscheibenförmig ausgebildet sind. Die beiden Teile 12, 13 sind in den Fig. 5 und 6 in Einzeldarstellungen in schematischer Ansicht dargestellt. Fig. 5 zeigt die Gelenkscheibe 15 und verdeutlicht, daß diese im wesentlichen klauenförmig ausgebildet ist und eine zentrale Ausnehmung 35 aufweist, die quadratischen Querschnitt besitzt.

Das in Fig. 6 dargestellte zweite Teil, die Gelenkscheibe 13 weist, wie sich insbesondere aus Fig. 6a erkennen läßt, eine Doppelanordnung von Gelenkscheiben 13a, 13b auf, die zwischen sich einen Innenraum I ausbilden, der der Aufnahme der Gelenkscheibe 12 dient. In der einen Gelenkscheibe 13b ist eine Ausnehmung 34 angeordnet, die gleichermaßen wie die Ausnehmung 35 quadratischen Querschnitt aufweist. In der Gelenkscheibenhälfte 13a ist eine Ausnehmung 36 angeordnet, die einen wesentlich kleineren Querschnitt besitzt.

Die Fig. 4 zeigt die zusammengebaute Gelenkverbindung 11 aus Gelenkscheiben 12, 13, 13a, 13b entsprechend einer Darstellung gemäß Fig. 1. Wie hieraus ersichtlich ist, sind die Gelenkscheiben 12 und 13 relativ zueinander um eine Achse A schwenkbar. Hierzu sind in den Gelenkscheiben 12, 13 Ausnehmungen 29, 30 angeordnet, die von einem Schwenkzapfen 26 durchgriffen werden.

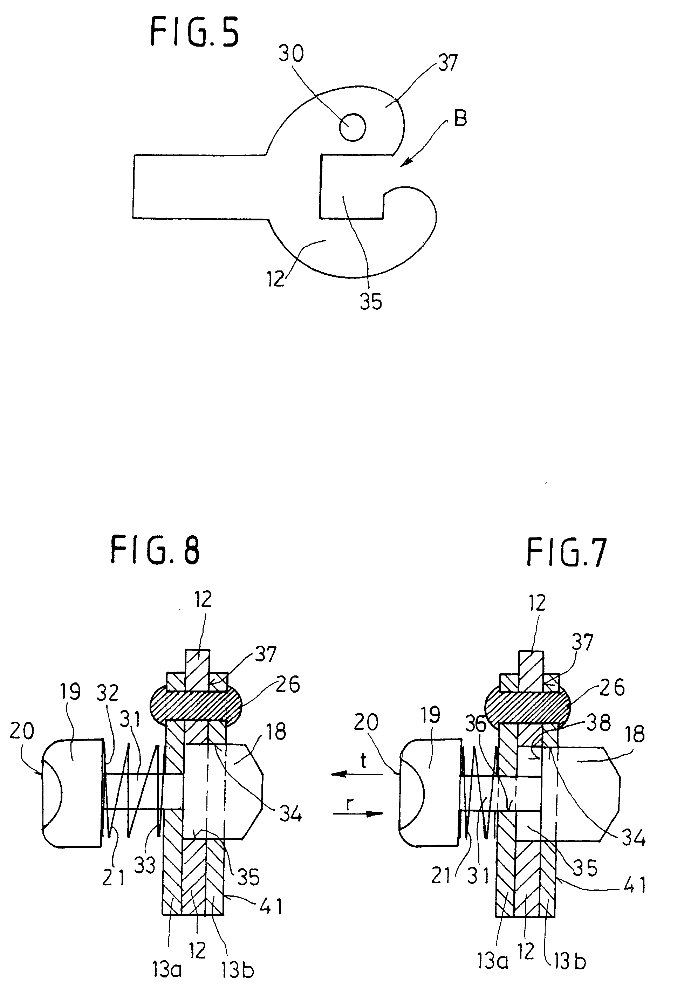

Wie sich insbesondere aus den Fig. 7 und 8 ergibt, ist ein Riegelelement 18 vorgesehen, welches einen im wesentlichen quadratischen Querschnitt aufweist, der auf den Querschnitt der Ausnehmung 34 und 35 angepaßt ist. An das eigentliche Riegelelement 18 schließt sich einstückig ein zapfenförmiger Abschnitt 31 an, der bei Betrachtung der Fig. 8 zunächst eine Ausnehmung 36 in der Gelenkscheibe 13 durchgreift. Der zapfenförmige Abschnitt 31 erstreckt sich aus der Gelenkscheibe 13a nach links heraus und endet in einem Betätigungsabschnitt 19, der beim Ausführungsbeispiel gemäß den Fig. 7 und 8 als im wesentlichen quaderförmiger Körper ausgebildet ist. Der Betätigungsabschnitt 19 umfaßt aber ebenfalls eine Betätigungsfläche 20, auf die ein Benutzer entgegen der Kraft eines Federelementes 21 eine Kraft in Richtung R ausüben kann.

Auf Grund der Kraftausübung in Richtung R findet eine Verlagerung des Riegelelementes 18 in eine Position gemäß Fig. 7 statt, in der das Riegelelement 18 ausschließlich in der Ausnehmung 34 in der Gelenkscheibe 13 b angeordnet ist und über deren bezüglich Fig. 7 rechte Seite 41 gegebenenfalls hervorsteht.

Ausgehend von einer Position gemäß Fig. 4, in der die Haltestange (10) auseinandergefaltet ist, kann diese nunmehr in eine nicht dargestellte zusammengefaltete Position verschwenkt werden, da die klauenförmige Ausbildung der Gelenkscheibe 12 einen Bewegungsspalt B zwischen den beiden Klauenenden freiläßt. Durch diesen Bewegungsspalt B hindurch kann der zapfenförmige Abschnitt 31 bei Betrachtung der Fig. 5 aus der Ausnehmung 35 heraustreten, soweit man die Projektion der Bewegung auf die Ebene der Fig. 5 betrachtet. Tatsächlich wird die klauenartige Gelenkscheibe 12 relativ zu einem feststehenden zapfenförmigen Abschnitt 31 von diesem wegverschwenkt, wobei der zapfenförmige Abschnitt 31 durch den Bewegungsspalt B hindurchtritt.

Nunmehr befindet sich während der Schwenkbewegung ständig ein Teil der in Fig. 5 schraffiert dargestellten und nur grob umrissenen Fläche 37 mit der bezüglich Fig. 7 linken Seite 38 des Riegelelementes 18 derart in Kontakt, daß das Riegelelement 18 in Lösestellung gehalten wird.

Wird die Haltestange 10 nach ihrer Aufbewahrung zur Montage des Sicherheitsnetzes nunmehr wieder in ihren auseinandergefalteten Zustand zurückverschwenkt, so tritt aufgrund der Federkraft des Federelementes 21 das Riegelelement 18 automatisch in die Ausnehmung 35 der Gelenkscheibe 12 ein, und verhindert durch seinen formschlüssigen Eingriff in diese Ausnehmung eine Relativverschwenkung von Gelenkscheibe 12 relativ zur Gelenkscheibe 13.

Das Federelement 21 stützt sich dabei mit seinem einen Ende 32 an dem Betätigungsabschnitt 19 und mit seinem anderen Ende 33 an der Gelenkscheibe 13a ab.

## Patentansprüche

1. Sicherheitsnetz zur lösbaren Anbringung in einem Fahrzeug, insbesondere in einem KFZ, mit wenigstens einer Haltestange (10), insbesondere einer unteren und einer oberen Haltestange, für das Sicherheitsnetz, die fahrzeugseitig befestigt, insbesondere eingehängt wird, wobei die Haltestange (10) mittels einer zwei um eine gemeinsame Achse (A) gegeneinander verschwenkbare Teile (12, 13, 13a, 13b) umfassenden Gelenkverbindung (11) faltbar ausgebildet ist, und wobei ein Riegelelement (18) zur Sicherung der Haltestange (10) in der auseinandergefalteten Position vorgesehen ist, welches im wesentlichen axial, d.h. im wesentlichen parallel zur Schwenkachse (A), verlagerbar ist, und wobei das Riegelelement (18) und ein Betätigungsabschnitt (19) zum Lösen des Riegelelementes (18) einstückig ausgebildet sind.

2. Vorrichtung nach Anspruch 1, **dadurch gekennzeichnet, daß** das Riegelelement (18), mittels einer an einem der beiden Teile (12, 13, 13a, 13b) angeordneten Steuerfläche (28) steuerbar ist.

3. Vorrichtung nach Anspruch 2, **dadurch gekennzeichnet, daß** die Steuerfläche (28) im Randbereich eines der beiden Teile (12, 13, 13a, 13b) angeordnet ist.

4. Vorrichtung nach Anspruch 2 oder 3, **dadurch gekennzeichnet, daß** die Steuerfläche (28) nur entlang einem begrenzten Umfangsbereich eines der beiden Teile (12, 13, 13a,13b) angeordnet ist.

5. Vorrichtung nach einem der vorangegangenen Ansprüche, **dadurch gekennzeichnet, daß** der Riegelbolzen (28) in seine Sperrstellung hinein mittels eines Federelementes (21) federbelastet ist.

6. Vorrichtung nach einem der vorangegangenen Ansprüche, **dadurch gekennzeichnet, daß** das Federelement (21) einen Befestigungsabschnitt (27) zur Befestigung des Riegelelementes (18) an einem der beiden Teile (12, 13, 13a, 13b) umfasst.

7. Vorrichtung nach Anspruch 5 oder 6, **dadurch gekennzeichnet, daß** das Federelement (21) als Blattfederelement ausgebildet ist.

8. Vorrichtung nach einem der Ansprüche 5 bis 7, **dadurch gekennzeichnet, daß** das Federelement (21) das Riegelelement (18) trägt.

9. Vorrichtung nach einem der Ansprüche 5 bis 8, **dadurch gekennzeichnet, daß** das Federelement (21) den Betätigungsabschnitt (19) umfasst.

10. Vorrichtung nach einem der Ansprüche 5 bis 9, **dadurch gekennzeichnet, daß** das Federelement (21) im Bereich der Schwenkachse (A) an einem der beiden Teile (12, 13, 13a, 13b) befestigt ist.

11. Vorrichtung nach einem der vorangegangenen Ansprüche, **dadurch gekennzeichnet, daß** das Riegelelement (18) entlang einer Kurvenbahn verlagerbar ist.

12. Vorrichtung nach Anspruch 11, **dadurch gekennzeichnet, daß** die Kurvenbahn eine Kurvenachse (Z) aufweist, die im wesentlichen senkrecht zu der Schwenkachse (A) steht.

13. Vorrichtung nach einem der vorangegangenen Ansprüche, **dadurch gekennzeichnet, daß** in dem ersten Teil (12) und dem zweiten Teil (13, 13a, 13b) Ausnehmungen (34, 35) angeordnet sind, die einen auf den Querschnitt des Riegelelementes (18) abgestimmten Querschnitt aufweisen.

14. Vorrichtung nach einem der vorangegangenen Ansprüche, **dadurch gekennzeichnet, daß** das Riegelelement (18) einen im wesentlichen polygonalen Querschnitt aufweist

15. Vorrichtung nach einem der vorangegangenen Ansprüche, **dadurch gekennzeichnet, daß** wenigstens eines der beiden Teile (12, 13, 13a, 13b) als Gelenkscheibe ausgebildet ist.

16. Vorrichtung nach einem der vorangegangenen Ansprüche, **dadurch gekennzeichnet, daß** eines der beiden Teile (12, 13, 13a, 13b) spangenförmig ausgebildet ist und das andere Teil (12) umgreift.

17. Vorrichtung nach einem der vorangegangenen Ansprüche, **dadurch gekennzeichnet, daß** dem Riegelelement (18) ein zapfenförmiger Abschnitt (31) zugeordnet ist, der im Querschnitt kleiner ausgebildet ist als das Riegelelement (18).

18. Vorrichtung nach Anspruch 17, **dadurch gekennzeichnet, daß** das der zapfenförmige Abschnitt (31) an seinem einem Ende das Riegelelement (18) und an seinem anderen Ende den Betätigungsabschnitt (19) trägt.

19. Vorrichtung nach Anspruch 18, **dadurch gekennzeichnet, daß** zwischen dem Betätigungsabschnitt (19) und einer Außenfläche eines der beiden Teile (13a) ein Federelement (21) angeordnet ist.

20. Vorrichtung nach einem der vorangegangenen Ansprüche, **dadurch gekennzeichnet, daß** das Riegelelement (18) aus Metall besteht.

## Claims

1. Safety net for being releasably fitted in a vehicle, in particular in a motor vehicle, having at least one retaining rod (10), in particular a lower and an upper retaining rod, for the safety net, which retaining rod is fixed, in particular suspended, at the vehicle side, the retaining rod (10) being constructed so as to be able to be folded by means of an articulated connection (11) which comprises two parts (12, 13, 13a, 13b) which can be pivoted relative to each other about a common axis (A), and a locking element (18) being provided in order to secure the retaining rod (10) in the unfolded position, which locking element can be displaced in a substantially axial manner, that is to say, substantially parallel with the pivot axis (A), and the locking element (18) and an operating portion (19) for releasing the locking element (18) being constructed as one piece.

2. Device according to claim 1, **characterised in that** the locking element (18) can be controlled by means of a control face (28) which is arranged on one of the two parts (12, 13, 13a, 13b).

3. Device according to claim 2, **characterised in that** the control face (28) is arranged in the peripheral region of one of the two parts (12, 13, 13a, 13b).

4. Device according to claim 2 or 3, **characterised in that** the control face (28) is arranged only along a limited peripheral region of one of the two parts (12, 13, 13a, 13b).

5. Device according to any one of the preceding claims, **characterised in that** the locking pin (18) is resiliently urged into the locking position thereof by means of a resilient element (21).

6. Device according to any one of the preceding claims, **characterised in that** the resilient element (21) comprises a fixing portion (27) for fixing the locking element (18) to one of the two parts (12, 13, 13a, 13b).

7. Device according to claim 5 or 6, **characterised in that** the resilient element (21) is constructed as a leaf spring element.

8. Device according to any one of claims 5 to 7, **characterised in that** the resilient element (21) carries the locking element (18).

9. Device according to any one of claims 5 to 8, **characterised in that** the resilient element (21) comprises the operating portion (19).

10. Device according to any one of claims 5 to 9, **characterised in that** the resilient element (21) is fixed to one of the two parts (12, 13, 13a, 13b) in the region of the pivot axis (A).

11. Device according to any one of the preceding claims, **characterised in that** the locking element (18) can be displaced along a curved path.

12. Device according to claim 11, **characterised in that** the curved path has a curved axis (Z) which is located substantially perpendicularly to the pivot axis (A).

13. Device according to any one of the preceding claims, **characterised in that** recesses (34, 35) are arranged in the first part (12) and the second part (13, 13a, 13b), which recesses (34, 35) have a cross-section which is adapted to the cross-section of the locking element (18).

14. Device according to any one of the preceding claims, **characterised in that** the locking element (18) has a substantially polygonal cross-section.

15. Device according to any one of the preceding claims, **characterised in that** at least one of the two parts (12, 13, 13a, 13b) is constructed as an articulated plate.

16. Device according to any one of the preceding claims, **characterised in that** one of the two parts (12, 13, 13a, 13b) is constructed as a clasp and engages around the other part (12).

17. Device according to any one of the preceding claims, **characterised in that** a journal-like portion (31) is associated with the locking element (18) and is constructed so as to have a smaller cross-section than the locking element (18) has.

18. Device according to claim 17, **characterised in that** the journal-like portion (31) carries the locking element (18) at one end thereof and the operating portion (19) at the other end thereof.

19. Device according to claim 18, **characterised in that** a resilient element (21) is arranged between the operating portion (19) and an outer face of one of the two parts (13a).

20. Device according to any one of the preceding claims, **characterised in that** the locking element (18) is of metal.

## Revendications

1. Filet de sécurité conçu pour être monté amoviblement dans un véhicule, notamment dans un véhicule automobile, comprenant au moins une barre de retenue (10), en particulier des barres de retenue inférieure et supérieure destinées aux filets de sécurité et fixées, notamment accrochées côté véhicule, ladite barre de retenue (10) étant de réalisation repliable au moyen d'une liaison articulée (11) englobant deux parties (12, 13, 13a, 13b) pouvant pivoter mutuellement autour d'un axe commun (A) ; un élément de verrouillage (18) étant prévu pour consigner la barre de retenue (10) à demeure dans la position déployée, ledit élément pouvant être sensiblement déplacé dans le sens axial, c'est-à-dire pour l'essentiel parallèlement à l'axe de pivotement (A) ; et ledit élément de verrouillage (18), et un segment d'actionnement (19) destiné à la libération dudit élément de verrouillage (18), étant réalisés d'un seul tenant.

2. Dispositif selon la revendication 1, **caractérisé par le fait que** l'élément de verrouillage (18) peut être commandé au moyen d'une surface de commande (28) située sur l'une des deux parties (12, 13, 13a, 13b).

3. Dispositif selon la revendication 2, **caractérisé par le fait que** la surface de commande (28) se trouve dans la région marginale de l'une des deux parties (12, 13, 13a, 13b).

4. Dispositif selon la revendication 2 ou 3, **caractérisé par le fait que** la surface de commande (28) est disposée uniquement le long d'une région limitée du pourtour de l'une des deux parties (12, 13, 13a, 13b).

5. Dispositif selon l'une des revendications précédentes, **caractérisé par le fait que** le tenon de verrouillage (18) est sollicité élastiquement au moyen d'un élément élastique (21), afin de parvenir à sa position de blocage.

6. Dispositif selon l'une des revendications précédentes, **caractérisé par le fait que** l'élément élastique (21) comprend un tronçon de fixation (27), en vue de la fixation de l'élément de verrouillage (18) à l'une des deux parties (12, 13, 13a, 13b).

7. Dispositif selon la revendication 5 ou 6, **caractérisé par le fait que** l'élément élastique (21) est réalisé sous la forme d'un élément du type lame de ressort.

8. Dispositif selon l'une des revendications 5 à 7, **caractérisé par le fait que** l'élément élastique (21) porte l'élément de verrouillage (18).

9. Dispositif selon l'une des revendications 5 à 8, **caractérisé par le fait que** l'élément élastique (21) comprend le segment d'actionnement (19).

10. Dispositif selon l'une des revendications 5 à 9, **caractérisé par le fait que** l'élément élastique (21) est fixé à l'une des deux parties (12, 13, 13a, 13b) dans la région de l'axe de pivotement (A).

11. Dispositif selon l'une des revendications précédentes, **caractérisé par le fait que** l'élément de verrouillage (18) peut être déplacé le long d'une trajectoire curviligne.

12. Dispositif selon la revendication 11, **caractérisé par le fait que** la trajectoire curviligne présente un axe (Z) sensiblement perpendiculaire à l'axe de pivotement (A).

13. Dispositif selon l'une des revendications précédentes, **caractérisé par le fait que** la première partie (12) et la seconde partie (13, 13a, 13b) comportent des évidements (34, 35) dotés d'une section transversale coordonnée à la section transversale de l'élément de verrouillage (18).

14. Dispositif selon l'une des revendications précédentes, **caractérisé par le fait que** l'élément de verrouillage (18) présente une section transversale sensiblement polygonale.

15. Dispositif selon l'une des revendications précédentes, **caractérisé par le fait qu'**au moins l'une des deux parties (12, 13, 13a, 13b) est réalisée sous la forme d'un disque d'articulation.

16. Dispositif selon l'une des revendications précédentes, **caractérisé par le fait que** l'une des deux parties (12, 13, 13a, 13b) est réalisée en forme d'agrafe, et ceinture l'autre partie (12).

17. Dispositif selon l'une des revendications précédentes, **caractérisé par le fait qu'**un segment (31) en forme de cheville, affecté à l'élément de verrouillage (18), est conçu d'une section transversale plus petite que celle dudit élément de verrouillage (18).

18. Dispositif selon la revendication 17, **caractérisé par le fait que** le segment (31) en forme de cheville porte l'élément de verrouillage (18) à l'une de ses extrémités, et le segment d'actionnement (19) à son autre extrémité.

19. Dispositif selon la revendication 18, **caractérisé par le fait qu'**un élément élastique (21) est interposé entre le segment d'actionnement (19) et une surface extérieure de l'une (13a) des deux parties.

20. Dispositif selon l'une des revendications précédentes, **caractérisé par le fait que** l'élément de verrouillage (18) consiste en un métal.
